# EUROPEAN PATENT SPECIFICATION

(11) **EP 3 814 080 B1**
(45) Date of publication and mention of the grant of the patent: **10.08.2022**
(21) Application number: 19716188.8
(22) Date of filing: 12.04.2019
(51) Int. Cl.: B29B 7/60, B29B 7/48, B29B 7/74, B29B 7/82, B29B 7/94, B29C 48/285, B29C 48/29, B29C 48/40, B29C 48/80, B29B 7/72, B29C 48/87, B29C 48/405, B29C 48/86, B29C 48/00, B29B 9/06

(54) **MIXING PROCESS FOR PRODUCING AN ELASTOMERIC COMPOSITION**
MISCHVERFAHREN ZUR HERSTELLUNG EINER ELASTOMEREN ZUSAMMENSETZUNG
PROCÉDÉ DE MÉLANGE POUR LA PRODUCTION D'UNE COMPOSITION ÉLASTOMÈRE

(30) Priority: 29.06.2018 FR 1855936
(43) Date of publication of application: 05.05.2021
(73) Proprietor: COMPAGNIE GENERALE DES ETABLISSEMENTS MICHELIN, 63000 Clermont-Ferrand (FR)
(72) Inventor: HOMBERT, Christophe, 63040 CLERMONT-FERRAND Cedex 9 (FR)
(74) Representative: Roussy, Delphine
(86) International application number: PCT/EP2019/059399
(87) International publication number: WO 2020/001823

(56) References cited:
- DE-A1-102016 002 143
- DE-A1-102016 010 082
- US-A- 4 290 986
- US-A- 4 721 589
- US-A- 5 232 960
- US-A1- 2004 222 543
- US-A1- 2014 023 743

## Description

### TECHNICAL FIELD

The invention is directed to execution of simplified liquid mixing processes in the production of composites destined for use in finished and semi-finished elastomeric products such as tires.

### BACKGROUND

A masterbatch (or masterbatch composition) is an elastomeric composite in which a charge has been introduced along with other optional additives (the terms "elastomer masterbatch composition", "masterbatch composition" and "masterbatch" are interchangeable). Masterbatches are often destined for the production of elastomeric compositions, for example, in the manufacture of tires and semi-finished products for tires (including but not limited to profiled products such as treads). Various methods exist for producing masterbatches, examples of which are disclosed by US Patent Nos. 6,048,923 and 6,075,084 and also by Japanese Patent No. JP5139610.

It is known to obtain a masterbatch by continuous liquid mixing, by which a constant high degree of mixing is realized. In the realization of elastomeric mixtures in a liquid phase (aqueous or solvent), there is a phase during which a masterbatch is derived from an elastomer in a liquid phase (e.g., emulsion or latex, solution). During this phase, the elastomer desirably exhibits a nano-distribution of charge particles (organic or inorganic) in the elastomer matrix. This nano-distribution is often created by a coagulum reactor, a mixer or an equivalent means that combines the elastomer in a liquid phase with a mixture of liquid and charges (hereinafter a "slurry").

Fixation of the charge in the elastomer matrix follows, and this phase corresponds to a state of "coagulation" between the two liquids. Coagulation results from a reaction to a kinetic and variable yield that is dependent upon the incoming ingredients. Coagulum is formed in many emulsion polymerizations, and the type and amount of coagulum formed depends upon the polymer system and the polymerization recipe and technique. For example, the tendency of silica particles to re-agglomerate after mixing, particularly attributable to the lack of affinity with the elastomer, is influenced by both temperature and by the water content of the silica. Thus, a concentrated slurry can decrease the setting time and also limit the volume of water to be extracted and processed. To form an elastomeric mixture, the masterbatch is then introduced into a kneading tool in order to introduce the vulcanization additives, thereby producing the final composition that is ready for incorporation into a rubber product such as a tire.

It is well understood that the signature of the liquid mixture is particularly related to the optimal distribution of the charge and its state of dispersion in the elastomeric matrix (see, for example, publication DE 10 2016010 082

A1 directed to a process for producing polyvinyl chlorides (PVC) in an extruder). Existing solutions propose dispersion of the charge (for example, in powder form) through one or more colloid mills, resulting in an expensive operation that is realized both in replacement equipment and water recycling treatment.

Being that liquid mixing is expensive and complex, and being that multiple types of masterbatch compositions are contemplated during tire production, the invention provides a process that realizes a loaded composite while reducing material losses and without adding water. A simplified liquid mixing process is realized wherein the metered latex is continuously mixed with a powdered charge (this being the state of the charge upon delivery) in a co-rotating twin-screw extruder. Execution of the inventive process facilitates production of a masterbatch composition and, upon addition of vulcanizing agents, a resultant elastomeric composition, upon egress of the composition from a mixing installation that employs the twin-screw extruder.

### SUMMARY

The invention is directed to a liquid mixing process according to claim 1 for producing an elastomeric composition as a function of a selected elastomeric composition recipe. The process includes the following steps:
- providing an emulsion stored in a liquid phase in an emulsion reservoir of an emulsion storage installation;
- providing a charge material stored in a solid phase in a discharge hopper of a charge dosing system;
- providing a mixing installation comprising an extruder disposed in a corresponding barrel having multiple pre-defined production zones along which a mixture is prepared from the emulsion and the charge material and an egress extent from which the mixture is discharged as the elastomeric composition;
- feeding a predetermined volume of the emulsion from the emulsion reservoir and a predetermined volume of the charge from the discharge hopper directly to a feeding zone of the mixing installation;
- conveying the mixture from the feeding zone toward the egress extent such that a residence time of the mixture in each production zone is controlled prior to transport of the mixture to a subsequent production zone; and
- discharging the elastomeric composition from the mixing installation.

The production zones include:
- the feeding zone along which the emulsion and the charge are fed directly to the extruder;
- a kneading zone defined downstream of the feeding zone along which the extruder realizes fine dispersion of charge particles in the emulsion;
- a drying zone defined downstream of the kneading zone along which the extruder controllably eliminates residual water from the mixture; and
- a mixing zone defined intermediate the drying zone and the egress extent of the mixing installation, and along which the extruder advances the mixture toward the egress extent and having a termination extent coextensive with the egress extent from which the mixture is discharged.

Further preferred embodiments are claimed in the dependent claims.

For some embodiments, the production zones also include a cooling zone defined intermediate the mixing zone and the egress extent of the mixing installation, and along which the temperature of the mixture is reduced to a target temperature upon discharge from the mixing installation.

For some embodiments, the process also includes a step of evacuating residual water from the mixture at a predetermined rate, this step being effected at a termination extent of the drying zone. For some of these embodiments, the step of evacuating residual water is effected by a vapor extractor disposed at the terminating extent of the drying zone.

For some embodiments, the process also includes a step of introducing one or more additives into the mixing zone via an additive doser that is disposed at an additive dosage position of the mixing zone at which the mixture reaches a pre-defined target temperature for introducing the one or more additives. For some of these embodiments, the one or more additives comprise silane.

For some embodiments, the process also includes a step of cooling the mixture at a cooling installation after discharge thereof from the mixing installation.

For some embodiments, the process also includes, after the step of cooling the mixture at the cooling installation, a step of reducing water content of the elastomeric composition at a drying installation disposed downstream of the cooling installation.

For some embodiments, the process also includes, after the step of reducing water content of the elastomeric composition at the drying installation, adjusting a viscosity of the elastomeric material at a plasticizer installation disposed downstream of the drying installation.

For some embodiments, the process also includes the step of converting the elastomeric composition into one or more bales after the step of cooling the mixture after discharge thereof from the mixing installation

For some embodiments, the process also includes a step of introducing one or more vulcanizing agents into the mixing zone via a vulcanizing agent doser that is disposed at a vulcanizing dosage position of the mixing zone downstream of the additive doser at which the mixture reaches a pre-defined target temperature for introducing the vulcanizing agents. For some of these embodiments, the one or more vulcanizing agents comprise sulfur.

For some embodiments, the process also includes at least one of the following steps:
- the step of forming the elastomeric composition into at least one rubber sheet; and
- the step of stacking the at least one rubber sheet on one or more palettes.

For some embodiments, the step of feeding a predetermined volume of the emulsion from the emulsion reservoir and a predetermined volume of the charge from the discharge hopper includes feeding simultaneously the predetermined volume of the emulsion and the predetermined volume of the charge to the feeding zone of the mixing installation.

For some embodiments, the step of feeding a predetermined volume of the emulsion from the emulsion reservoir and a predetermined volume of the charge from the discharge hopper includes introducing the predetermined volume of the charge into the feeding zone prior to introducing the predetermined volume of the emulsion.

For certain embodiments, the extruder is a co-rotating twin-screw extruder.

Other aspects of the disclosed invention will become readily apparent from the following detailed description.

### BRIEF DESCRIPTION OF DRAWINGS

The nature and various advantages of the presently disclosed invention will become more apparent upon consideration of the following detailed description, taken in conjunction with the accompanying drawings, in which like reference characters refer to like parts throughout, and in which:
FIG. 1 shows a schematic view of an exemplary system that realizes simplified liquid mixing during a masterbatch production cycle.
FIG. 2 shows a schematic view of a known co-rotating twin-screw extruder.
FIG. 3 shows a schematic view of a variant of the system of FIG. 1 that realizes simplified liquid mixing during an elastomeric composition production cycle.

### DETAILED DESCRIPTION

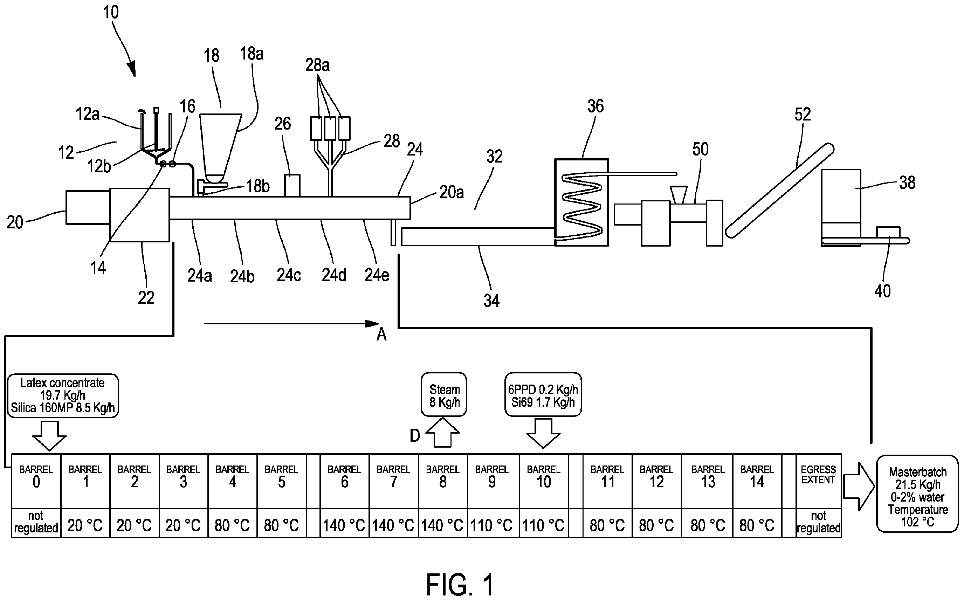

Now referring further to the figures, in which like numbers identify like elements, FIG. 1 shows an exemplary system 10 that realizes a simplified liquid mixing process for producing a composite as a function of a selected rubber mixture recipe. As shown and described herein with reference to FIG. 1, system 10 includes equipment that delineates a sequence of production of a masterbatch composite according to a recipe that is selected from among a plurality of masterbatch recipes.

As used herein, the interchangeable terms "composite", "composition" and "elastomeric composition" shall refer to the elastomeric mixture realized by the disclosed invention throughout an elastomeric composition production cycle. A "composite" shall refer herein to an intermediate coagulum, a pelletized material (which may be a humid crumb or a dry crumb and may be referred to as "pellets" or "dosed pellets"), an extrudate, a sheet or band of rubber and any equivalent finished or semi-finished product derived from the system 10. A "composite" shall refer to an elastomeric composition and any mixture derived therefrom, a masterbatch composition and any mixture derived therefrom, or simply a "composition".

Still referring to FIG. 1, among the equipment provided with system 10 is an emulsion storage installation 12 having an emulsion reservoir 12a. The emulsion reservoir 12a stores an elastomer emulsion (or latex) wherein the elastomer is selected from natural rubber, various synthetic elastomers (e.g., SBR, BR, etc.) and various elastomer blends. The emulsion reservoir 12a is equipped with an agitator 12b that ensures particle dispersion in the emulsion, although it is understood that equivalent agitation means may be substituted therefor.

System 10 includes an emulsion conduit 12c with a predetermined diameter that, together with a peristaltic pump (or series of pumps) 14 disposed intermediate the emulsion conduit and the emulsion reservoir 12a, conveys a precise volume of emulsion from the emulsion reservoir 12a to a mixing installation 20 (described further hereinbelow). It is understood that the peristaltic pump 14 may be substituted by one or more equivalent devices, including but not limited to one or more positive displacement pumps (e.g., eccentric rotor pumps, diaphragm pumps, piston pumps, etc.). A respective mass flow meter 16 may be operatively disposed relative to the emulsion conduit 12c and the mixing installation 20 so as directly measure the mass and density of the conveyed emulsion. The mass flow meter 16 may be a Coriolis flow meter positioned downstream of the peristaltic pump 14, although it is understood that an equivalent apparatus may be substituted therefor.

System 10 also includes a charge dosing system 18 having a discharge hopper 18a in communication with a charge conduit 18b that delivers a precise volume of charge to the mixing installation 20. The charge dosing system 18 includes a gravimetric doser having a dosing screw as is known in the art for establishing a desired flow volume. The speed of the doing screw is readily adapted such that the precise volume of charge may be introduced into the mixing installation 20 according to the needs of the selected recipe. The charge is selected from one or more known materials, including but not limited to carbon black, silica, kaolin, chalk, synthesized organic charges, natural organic charges (e.g., wood fibers, cellulose fibers, etc.) and combinations and equivalents thereof. The selected charge may be stored as a powder, as a liquid, or as any another amenable medium as is known in the art.

The discharge hopper 18a conveys the charge to the mixing installation 20 at a fixed speed according to a flow setpoint commensurate with the selected medium (e.g., a powdered charge). A monitoring system (not shown) having at least one sensor may detect one or more of a filling rate at which the charge is conveyed to the mixing installation 20, a current fill height of the charge in the discharge hopper 18a and a current weight of the charge material in the discharge hopper 18a (e.g., as determined from detection of the discharge rate and the current fill height). The monitoring system can generate one or more signals indicative of a predetermined fill height and/or weight. The monitoring may be continuous or intermittent such that the command signals can effect a real-time adjustment. Delivery to the mixing installation 20 is effected generally at or near atmospheric pressure and typically by the effect of gravity.

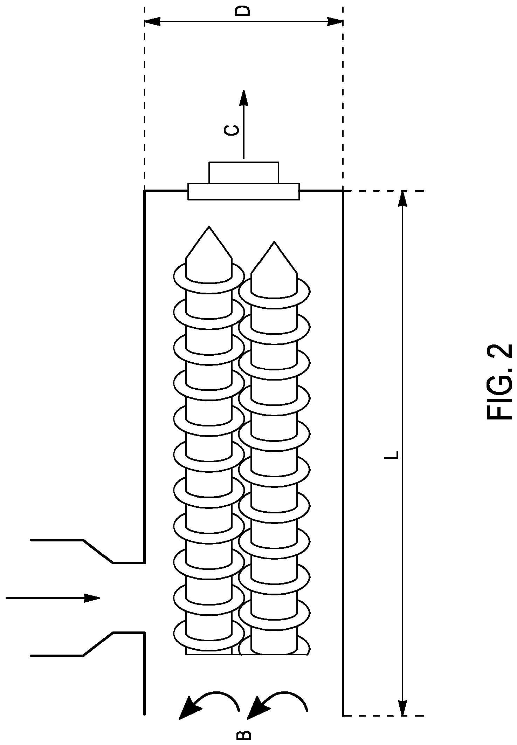

Still referring to FIG. 1 and referring further to FIG. 2, the mixing installation 20 includes an extruder 22 disposed in a corresponding barrel 24. Along the length of the barrel 24, there are multiple pre-defined production zones along which the extruder conveys the mixture of the emulsion and the charge material (hereinafter "mixture") toward an egress extent 20a of the mixing installation 20 (see arrow A of FIGS. 1 and 2).

As shown and described herein, the extruder 22 is a co-rotating twin-screw extruder, an example of which is represented by FIG. 2. Because the rotation of the intermeshing screws (see the arrows B of FIG. 2) provides better mixing for producing a homogeneous solid having finely dispersed particles, twin-screw extruders are often utilized for melt-mixing polymers with additional materials, including fillers and reinforcing agents. Twin-screw extrusion is thus appreciated for its consistency and increased productivity due to performing both particle-size reduction and mixing. The screws, which are fitted on a common shaft, provide different types of mixing and conveying conditions at the various zones in the barrel. The length of the screw L in relation to the barrel diameter D (the L/D ratio) can be selected to optimize the degree of mixing and the number of zones required to attain the final product characteristics. The twin-screw extruder can exhibit a variety of known screw and barrel configurations for processing a wide range of raw materials as a function of the selected recipe. As used herein, the term "twin screw extruder" shall also mean "conical twin extruder", "twin screw roller head extruder", "twin screw discharge extruder", "twin screw sheeter", "kneader", "co-rotating mixer", "continuous processor" and any other equivalent nomenclature that is commonly used and understood in the art to denote similar and equivalent rubber machinery.

The production zones defined along the length of the barrel 24 include a feeding zone 24a, a kneading zone 24b, a drying zone 24c and a mixing zone 24d. In some embodiments, the production zones may also include an optional cooling zone 24e. During an elastomeric composition production cycle, a target temperature of the mixture is specified for each zone along with a time at which the mixture enters and exits each zone (hereinafter "residence time"). In doing so, the system 10 realizes the chemical reactions needed to obtain an elastomeric mixture having targeted rheological properties. These properties are variable and adaptable as a function of the ultimate implementation of the elastomeric composition. For example, for compositions that are destined for the manufacture of tires, the resultant tire should exhibit targeted performance properties (e.g., reduced rolling resistance, improved wear resistance, a comparable grip in wet and dry conditions, etc.). The use of a co-rotating twin screw sustains control of the residence time and therefore respects the level of energy, temperature and dosage of additives and, where applicable, vulcanizing agents.

Among the zones specified in the barrel 24, a feeding zone 24a is provided along which the emulsion and the charge are fed directly to the extruder 22 for preparation of the elastomeric composition. More particularly, in the feeding zone 24a, at least one emulsion (or latex) ingress feeds the emulsion directly from the emulsion reservoir 12a, and at least one charge ingress feeds the charge directly from the discharge hopper 18a. In some embodiments of the invention, so as to obviate obstruction of the feeding zone 24a, a predetermined volume of the charge is introduced into the feeding zone 24a prior to introduction of a predetermined volume of the emulsion. In some embodiments of the invention, a predetermined volume of the emulsion from the emulsion reservoir and a predetermined volume of the charge from the discharge hopper are fed simultaneously to the feeding zone 24a.

From the feeding zone 24a, the intermeshing rotation of the extruder 22 controllably propels the mixture downstream of the feeding zone toward a kneading zone 24b. A kneading process that is realized along the kneading zone 24b ensures fine dispersion of the charge particles in the emulsion. In order to facilitate kneading (that is, the mechanical action that promotes a state of mixing) while simultaneously effecting a controlled progression of the mixture toward the egress extent 20a, the screws of the extruder 22 rotate so as to generate sufficient friction between the mixture conveyed thereby and an inner wall surface of the barrel 24. The screws' rotational speed, governed by a programmable motor (not shown), establishes the conveyance rate of the mixture and the resultant shearing efficiency. The shearing of the continuously propelled mixture elevates its temperature so as to create a mixture having a targeted temperature upon egress from the kneading zone.

Upon egress from the kneading zone 24b, the extruder 22 controllably propels the mixture downstream of the kneading zone toward a drying zone 24c along which residual water is further eliminated from the mixture. Along the drying zone 24c, the barrel 24 maintains a constant temperature as the mixture is conveyed therealong. The drying zone 24c terminates at a vapor extractor 26 that evacuates the water extracted from the mixture at a predetermined rate (see arrow D of FIG. 1). The vapor extractor 26 may be selected from a variety of commercially available devices, including but not limited to those having a vacuum or other means for removing the water vapor and any inherent particulate matter.

Upon egress from the drying zone 24c, the extruder 22 controllably propels the mixture downstream of the drying zone toward a mixing zone 24d. The mixing zone 24d is defined along a portion of the barrel 24 between the vapor extractor 26 and the egress extent 20a. Within the mixing zone 24d, the extruder 22 advances the mixture toward an additive doser 28 that introduces one or more additives 28a into the mixing zone 24d. The additive doser 24d is disposed at an additive dosage position of the mixing zone 24d at which the mixture reaches a pre-defined target temperature for introducing the additives 28a. This target temperature is defined as a function of the selected recipe for the elastomeric composition. The additive doser 28 may include at least one of a volumetric doser and a gravimetric doser such that the additives 28a may be selectively introduced in liquid and powder forms according to the needs of the selected recipe. During the simplified liquid mixing process, the extruder 22 controls the downstream conveyance of the mixture such that the mixture realizes a minimum residence time at the additive dosage position.

The additives introduced into the elastomeric mixture at the additive dosage position may include, but are not limited to, one or more oils, one or more complementary elastomers, recycled materials, one or more protection agents and one or more antioxidants. In some embodiments, silane is introduced into the mixture at the additive dosage position. After reaction, silane produces a covalent bond between the elastomer and the silica. In the manufacture of tires and semi-finished products for tires, the technology of silanizing the silica is known for use in green tires so as to impart the resultant tire product with properties of enhanced abrasion resistance, reduced rolling resistance and improved fuel economy.

The extruder 22 discharges the mixture from the egress extent 20a as an elastomeric composition. In certain embodiments, upon egress from the mixing zone 24d and prior to discharge from the egress extent 20a, the extruder 22 controllably propels the mixture downstream of the mixing zone toward a cooling zone 24e. In the cooling zone 24e, the temperature of the mixture is reduced to a target temperature prior to discharge from the egress extent 20a. For some recipes, such cooling may be desirable prior to transfer of the elastomeric composition toward a downstream apparatus or installation that forms the composition.

In an exemplary embodiment, the mixture is discharged from the mixing installation 20 as a pelletized material (also known as "crumb" or "pellets") already possessing the requisite charge and additives for industrial application. The pelletized material is conveyed subsequently to a cooling installation 34 at which the temperature of the elastomeric composition is further reduced. The cooling installation may include a cooling bath or other equivalent means that is known in the art for reducing the temperature of an elastomeric composition, thereby preparing it for further processing and/or storage.

Still referring to FIG. 1, the system 10 conveys the elastomeric composition from the cooling installation 34 to a drying installation 36 having a suitable drying device that reduces the water content of the elastomeric composition and discharges the resultant effluent for appropriate treatment. The drying device may be selected from a variety of commercially available devices, and it is understood that other suitable devices may be substituted therefor, including but not limited to extruder dryers, fluid bed dryers, hot air and other oven dryers and equivalents thereof.

The system 10 discharges the elastomeric composition from the drying installation 36 and conveys it toward a press 38. The press 38 converts the dewatered composition into one or more bales 40 that can be classified by type (e.g., BR, SBR, IR) and by grade, with each type and grade designating an elastomer whose properties are known. The press 38 may be selected from a variety of commercially available presses and equivalent devices. Various kinds, grades, species, lots and batches of elastomers can be generated from such bales as is known in the art. Thus, upon discharge from the press 38, the elastomeric composition is suitable for use as a masterbatch composition.

In certain embodiments of the system 10, the system may include a plasticizer installation 50 that realizes a step of adjusting the viscosity of the elastomeric material as a function of its ultimate use (e.g., as a masterbatch or as a mixture). In such embodiments, the elastomeric material that is discharged from the drying installation 36 is subsequently fed to the plasticizer installation 50. Upon discharge from the plasticizer installation 50, the elastomeric material is transferred to the press 38 (for example, by a conveyor 52 or by equivalent means) in order to prepare one or several bales 40 thereat. A plasticizer that is employed at the plasticizer installation 50 may be selected from a variety of commercially available plasticizers, including but not limited to a finger screw, a continuous mixer (e.g., a cylinder tool) or a batch mixer (for example, an internal mixer).

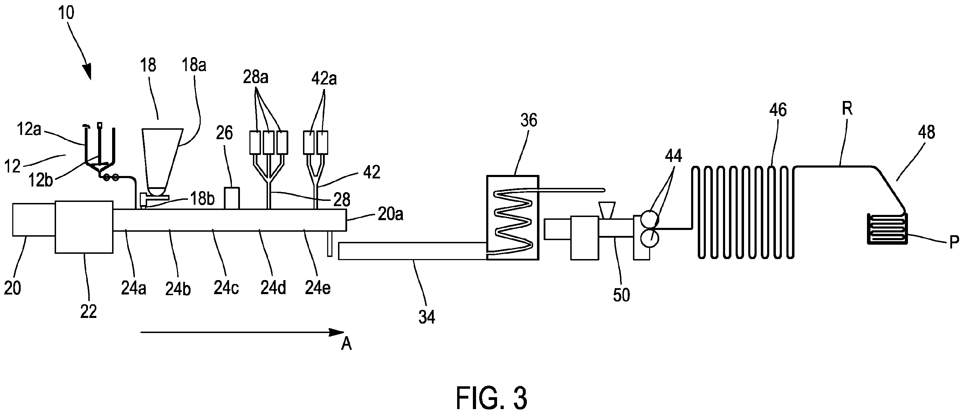

Referring further to FIG. 3, a variant of system 10 is shown wherein like elements are identified by like numerals. As shown and described herein with reference to FIG. 3, system 10 includes equipment that delineates a sequence of production of an elastomeric composition that includes vulcanizing agents. In particular, a vulcanizing agent doser 42 is positioned downstream of the additive dosage position in the mixing zone 24d (and upstream of a drying zone 24e for those embodiments that incorporate the optional drying zone). The vulcanizing agent doser 42, through which one or more vulcanizing agents 42a are introduced into the mixing zone 24d, is disposed at a vulcanizing dosage position of the mixing zone 24d at which the mixture reaches a pre-defined target temperature for introducing the vulcanizing agents 42a. This target temperature is defined as a function of the selected recipe for the elastomeric composition. The vulcanizing doser 42 may include at least one of a volumetric doser and a gravimetric doser such that the vulcanizing agents 42a may be introduced selectively in liquid and powder forms according to the needs of the selected recipe. These liquid and powder forms may be incorporated in one or more elastomer blocks. The nature of the additive (i.e., whether it is in liquid or powder form) may determine the dosing device to be used (weighing system for powder, volumetric pump for liquid and gear or volumetric pump for elastomer pellets). During the simplified liquid mixing process, the extruder 22 controls the downstream conveyance of the mixture such that the mixture realizes a minimum residence time at each of the additive dosage position and the vulcanizing agent dosage position.

In certain embodiments, the vulcanizing agents include at least one of sulfur and one or several accelerators. It is understood that other vulcanizing and crosslinking agents and their complements can be introduced into the mixing zone 24d as understood by a person of ordinary skill in the art.

In the modified system 10, the mixing installation 20 discharges the resultant elastomer composite from the egress extent 20a toward an apparatus or installation that forms the finished or semi-finished composite. An exemplary apparatus is shown herein as a pair of rollers 44 that form the composite into a rubber sheet or band of rubber material R as is known in the art. The rollers 44 can have an adjustable distance therebetween that enables variance in the product thickness. For embodiments of the modified system 10 that realize a step of adjusting the viscosity of the elastomeric material, the elastomeric material discharged from the drying installation 36 is fed into the plasticizer installation 50 prior to formation of the rubber sheet R by the rollers 44.

As further shown in FIG. 3, the modified system 10 conveys the band R downstream of the mixing installation 20 to a cooling installation 46. In some embodiments, the band R is cooled to a temperature at or about 35 °C in order to prepare the elastomeric composition for further processing and/or storage. As shown herein, cooling may be effected by a batch-off cooling line or equivalent means that is known for reducing rubber temperatures to ambient.

The modified system 10 conveys the cooled band R to an optional stacking installation 48 that is capable of receiving and stacking the elastomeric composition (for example, by means of a stacking apparatus provided thereat). A monitoring system may be provided that includes a system of detection for monitoring the band R as it is stacked upon one or more palettes P. The palettes P, when full, are transported for storage and/or further processing of the elastomeric composition as a function of the composition's destined use.

Reference is now made to FIG. 1 for describing an example of a simplified liquid mixing process that is performed by the system 10 for creating a masterbatch composition. All positions indicated are in relation to a longitudinal extent of the barrel 24.

### EXAMPLE

• The following recipe is selected for realizing a mixture of natural rubber (NR) and silica charged at 70 PHR

**TABLE 1**

| **Ingredients** | NR | Silica 160MP (^{∗}) | Silane (Si69)(^{∗∗}) | Antioxidant (6PPD) |
|---|---|---|---|---|
| **Part (phr)** | 100 | 70 | 14 | 1,5 |
| **Mass flow (kg/h)** | 12 | 8,5 | 1,7 | 0,2 |
| **Temp max (°C)** | 180 °C | 180 °C | 150 °C | 180 °C |

| | | | | |
|---|---|---|---|---|
| (^{∗}) The silica presents a specific surface CTAB of 160m²/g and is available commercially from Solvay under the trademark ZEOSIL^{®} 1165 MP (^{∗∗}) Available commercially under the trademark Si 69^{®} | | | | |

• The emulsion reservoir 12a feeds a concentrated latex to the mixing installation 20 at a rate of 19.7 kg/h (position C0).
• The discharge hopper 18a feeds a highly dispersible silica to the mixing installation 20 at a rate of 8.5 kg/h (position C0).
• The extruder 22 realizes a speed of 350 rpm (positions C0 to C14).
• The vapor extractor 26 realizes a steam discharge rate of 8 kg/h (position C8).
• For the selected recipe, the dosages of each additive and vulcanizing agent are regulated as follows:
o Maximum debit of antioxidant 6PPD introduced by additive doser 28: 0.2 kg/h (position C10)
o Maximum debit of silane (Si69) introduced by additive doser 28: 1.7 kg/h (position C10)

• In order to realize the necessary chemical reactions that produce a mixture having the predicted rheological properties, the following mixture temperatures are realized in each of the feeding zone 24a, the kneading zone 24b, the drying zone 24c and the mixing zone 24d:

**TABLE 2**

| **Position** | *C0-C3* | *C4-C5* | *C6-C7* | *C8* | *C9-C10* | *C11-C12* | *C13-14* |
|---|---|---|---|---|---|---|---|
| **Function** | Feeding | Dispersive mixing | Drying | Steam discharge | Formulation | Cooling | Plastification |
| **Temp.** | 20 °C | 80 °C | 140 °C | 140 °C | 110 °C | 80 °C | 80 °C |
| **Zone type** | pump | kneading | kneading | pump | mixing | pump | mixing |

Thus, the system 10 realizes the execution of simplified full liquid mixing with the direct production of a finished elastomeric composition therefrom (e.g., a masterbatch composition or a mixture). While the system's use of commercial latex and a powder charge does not deviate from other liquid mixing processes, a simplified liquid mixing process that is realized by system 10 employs a twin screw extruder, rather than internal mixers, to effect destabilization of the latex, distribution and dispersion of the charge, drying and mastication, and formulation of the composite or mixture. A high quality mixture is thus obtained with the suppression of a coagulation step, and commensurate suppression of corresponding equipment (e.g., charge slurry line, coagulation mixer, wringer) and process steps, when a destabilizing charge (i.e., silica) is used for the latex.

As used herein, the term "method" or "process" may include one or more steps performed at least by one electronic or computer-based apparatus having a processor for executing instructions that carry out the steps.

The terms "at least one" and "one or more" are used interchangeably. Ranges that are described as being "between a and b" are inclusive of the values for "a" and "b."

## Claims

1. A liquid mixing process for producing an elastomeric composition as a function of a selected elastomeric composition recipe, the process comprising the following steps:
providing an emulsion stored in a liquid phase in an emulsion reservoir (12a) of an emulsion storage installation (12);
providing a charge material stored in a solid phase in a discharge hopper (18a) of a charge dosing system (18);
providing a mixing installation (20) comprising an extruder (22) disposed in a corresponding barrel (24) having multiple pre-defined production zones (24a, 24b, 24c, 24d) along which a mixture is prepared from the emulsion and the charge material and an egress extent (20a) from which the mixture is discharged as the elastomeric composition, wherein the production zones comprise:
a feeding zone (24a) along which the emulsion and the charge material are fed directly to the extruder (22);
a kneading zone (24b) defined downstream of the feeding zone (24a) along which the extruder (22) realizes fine dispersion of charge particles in the emulsion;
a drying zone (24c) defined downstream of the kneading zone (24b) along which the extruder (22) controllably eliminates residual water from the mixture; and
a mixing zone (24d) defined intermediate the drying zone (24c) and the egress extent (20a) of the mixing installation (20), and along which the extruder (22) advances the mixture toward the egress extent and having a termination extent coextensive with the egress extent from which the mixture is discharged;
feeding a predetermined volume of the emulsion from the emulsion reservoir and a predetermined volume of the charge from the discharge hopper directly to a feeding zone (24a) of the mixing installation (20);
conveying the mixture from the feeding zone (24a) toward the egress extent (20a) such that a residence time of the mixture in each production zone is controlled prior to transport of the mixture to a subsequent production zone; and
discharging the elastomeric composition from the mixing installation (20).

2. The process of claim 1, wherein the production zones further comprise a cooling zone (24e) defined intermediate the mixing zone (24d) and the egress extent (20a) of the mixing installation (20), and along which the temperature of the mixture is reduced to a target temperature upon discharge from the mixing installation (20).

3. The process of claim 2, further comprising the step of evacuating residual water from the mixture at a predetermined rate, this step being effected at a termination extent of the drying zone (24c).

4. The process of claim 3, wherein the step of evacuating residual water is effected by a vapor extractor (26) disposed at the terminating extent of the drying zone (24c).

5. The process of any one of claims 1 to 4, further comprising the step of introducing one or more additives (28a) into the mixing zone (24d) via an additive doser (28) that is disposed at an additive dosage position of the mixing zone (24d) at which the mixture reaches a pre-defined target temperature for introducing the one or more additives.

6. The process of claim 5, wherein the one or more additives comprise silane.

7. The process of any of claims 1 to 6, further comprising the step of cooling the mixture at a cooling installation (34) after discharge thereof from the mixing installation (20).

8. The process of claim 7, further comprising, after the step of cooling the mixture at the cooling installation (34), the step of reducing water content of the elastomeric composition at a drying installation (36) disposed downstream of the cooling installation (34).

9. The process of claim 8, further comprising, after the step of reducing water content of the elastomeric composition at the drying installation (36), adjusting a viscosity of the elastomeric material at a plasticizer installation (50) disposed downstream of the drying installation (36).

10. The process of claim 9, further comprising the step of converting the elastomeric composition into one or more bales (40) after the step of cooling the mixture after discharge thereof from the mixing installation

11. The process of any of claims 1 to 9, further comprising the step of introducing one or more vulcanizing agents (42a) into the mixing zone (24d) via a vulcanizing agent doser (42) that is disposed at a vulcanizing dosage position of the mixing zone downstream of the additive doser (28) at which the mixture reaches a pre-defined target temperature for introducing the vulcanizing agents.

12. The process of claim 11, wherein the one or more vulcanizing agents comprise sulfur.

13. The process of claim 11 or claim 12, further comprising at least one of the following steps:
the step of forming the elastomeric composition into at least one rubber sheet (R); and
the step of stacking the at least one rubber sheet (R) on one or more palettes (P).

14. The process of any of claims 1 to 13, wherein the extruder (22) comprises a co-rotating twin-screw extruder.

15. The process of any of claims 1 to 14, wherein the step of feeding a predetermined volume of the emulsion from the emulsion reservoir (12a) and a predetermined volume of the charge from the discharge hopper (18a) includes feeding simultaneously the predetermined volume of the emulsion and the predetermined volume of the charge to the feeding zone (24a) of the mixing installation (20).

16. The process of any of claims 1 to 14, wherein the step of feeding a predetermined volume of the emulsion from the emulsion reservoir (12a) and a predetermined volume of the charge from the discharge hopper (18a) includes introducing the predetermined volume of the charge into the feeding zone (24a) prior to introducing the predetermined volume of the emulsion.

## Patentansprüche

1. Flüssigmischverfahren zur Produktion einer elastomeren Zusammensetzung als Funktion eines ausgewählten Rezepts der elastomeren Zusammensetzung, wobei das Verfahren die folgenden Schritte umfasst:
Bereitstellen einer Emulsion, die in einer Flüssigphase in einem Emulsionsreservoir (12a) einer Emulsionslagerungsinstallation (12) gelagert wird;
Bereitstellen eines Beschickungsmaterials, das in einer Festphase in einem Austragungstrichter (18a) eines Beschickungsdosiersystems (18) gelagert wird;
Bereitstellen einer Mischinstallation (20), umfassend einen Extruder (22), der in einem entsprechenden Zylinder (24) angeordnet ist, mit mehreren vordefinierten Produktionszonen (24a, 24b, 24c, 24d), entlang derer eine Mischung aus der Emulsion und dem Beschickungsmaterial hergestellt wird, und einem Austrittsmaß (20a), aus dem die Mischung als elastomere Zusammensetzung ausgetragen wird, wobei die Produktionszonen umfassen:
eine Speisezone (24a), entlang der die Emulsion und das Beschickungsmaterial direkt in den Extruder (22) eingespeist werden;
eine Knetzone (24b), die nachgeordnet zu der Speisezone (24a) definiert ist, entlang der der Extruder (22) feine Dispersion der Beschickungsteilchen in der Emulsion realisiert;
eine Trocknungszone (24c), die nachgeordnet zu der Knetzone (24b) definiert ist, entlang der der Extruder (22) kontrollierbar Restwasser aus der Mischung eliminiert; und
eine Mischzone (24d), die zwischen der Trocknungszone (24c) und dem Austrittsmaß (20a) der Mischinstallation (20) definiert ist, und entlang der der Extruder (22) die Mischung in Richtung des Austrittsmaßes voranbringt, und mit einem Abschlussmaß, das flächengleich mit dem Austrittsmaß ist, aus dem die Mischung ausgetragen wird;
Einspeisen eines vorbestimmten Volumens der Emulsion aus dem Emulsionsreservoir und eines vorbestimmten Volumens der Beschickung aus dem Austragungstrichter direkt in eine Speisezone (24a) der Mischinstallation (20);
Fördern der Mischung aus der Speisezone (24a) in Richtung des Austrittsmaßes (20a) derart, dass eine Verweilzeit der Mischung in jeder Produktionszone gesteuert wird, bevor die Mischung in eine nachfolgende Produktionszone transportiert wird; und
Austragen der elastomeren Zusammensetzung aus der Mischinstallation (20).

2. Verfahren nach Anspruch 1, wobei die Produktionszonen des Weiteren eine Kühlzone (24e) umfassen, die zwischen der Mischzone (24d) und dem Austrittsmaß (20a) der Mischinstallation (20) definiert ist, und entlang der die Temperatur der Mischung auf eine Zieltemperatur bei Austragung aus der Mischinstallation (20) reduziert wird.

3. Verfahren nach Anspruch 2, des Weiteren umfassend den Schritt des Evakuierens von Restwasser aus der Mischung mit einer vorbestimmten Rate, wobei dieser Schritt an einem Abschlussmaß der Trocknungszone (24c) bewirkt wird.

4. Verfahren nach Anspruch 3, wobei der Schritt des Evakuierens von Restwasser durch einen Dampfextraktor (26) bewirkt wird, der an dem Abschlussmaß der Trocknungszone (24c) angeordnet ist.

5. Verfahren nach einem der Ansprüche 1 bis 4, des Weiteren umfassend den Schritt des Einbringens von einem oder mehreren Additiven (28a) in die Mischzone (24d) mittels eines Additivdosierers (28), der an einer Additivdosierposition der Mischzone (24d) angeordnet ist, an der die Mischung eine vordefinierte Zieltemperatur zum Einbringen des einen oder der mehreren Additive erreicht.

6. Verfahren nach Anspruch 5, wobei das eine oder die mehreren Additive Silan umfasst bzw. umfassen.

7. Verfahren nach einem der Ansprüche 1 bis 6, des Weiteren umfassend den Schritt des Kühlens der Mischung in einer Kühlinstallation (34) nach dem Austragen derselben aus der Mischinstallation (20) .

8. Verfahren nach Anspruch 7, des Weiteren umfassend nach dem Schritt des Kühlens der Mischung in der Kühlinstallation (34) den Schritt des Reduzierens des Wassergehalts der elastomeren Zusammensetzung in einer Trocknungsinstallation (36), die nachgeordnet zu der Kühlinstallation (34) angeordnet ist.

9. Verfahren nach Anspruch 8, des Weiteren umfassend nach dem Schritt des Reduzierens des Wassergehalts der elastomeren Zusammensetzung in der Trocknungsinstallation (36) Einstellen einer Viskosität des elastomeren Materials in einer Plastifiziererinstallation (50), die nachgeordnet zu der Trocknungsinstallation (36) angeordnet ist.

10. Verfahren nach Anspruch 9, des Weiteren umfassend den Schritt des Umwandelns der elastomeren Zusammensetzung in einen oder mehrere Ballen (40) nach dem Schritt des Kühlens der Mischung nach deren Austragung aus der Mischinstallation.

11. Verfahren nach einem der Ansprüche 1 bis 9, des Weiteren umfassend den Schritt des Einbringens von einem oder mehreren Vulkanisierungsmitteln (42a) in die Mischzone (24d) mittels eines Vulkanisierungsmitteldosierers (42), der an einer Vulkanisierungsdosierposition der Mischzone nachgeordnet zu dem Additivdosierer (28) angeordnet ist, an der die Mischung eine vordefinierte Zieltemperatur zum Einbringen der Vulkanisierungsmittel erreicht.

12. Verfahren nach Anspruch 11, wobei das eine oder die mehreren Vulkanisierungsmittel Schwefel umfasst bzw. umfassen.

13. Verfahren nach Anspruch 11 oder Anspruch 12, des Weiteren umfassend mindestens einen der folgenden Schritte:
den Schritt des Ausbildens der elastomeren Zusammensetzung zu mindestens einer Gummiplatte (R); und
den Schritt des Stapelns der mindestens einen Gummiplatte (R) auf einer oder mehreren Paletten (P).

14. Verfahren nach einem der Ansprüche 1 bis 13, wobei der Extruder (22) einen gleichläufigen Doppelschneckenextruder umfasst.

15. Verfahren nach einem der Ansprüche 1 bis 14, wobei der Schritt des Einspeisens eines vorbestimmten Volumens der Emulsion aus dem Emulsionsreservoir (12a) und eines vorbestimmten Volumens der Beschickung aus dem Austragungstrichter (18a) simultanes Einspeisen des vorbestimmten Volumens der Emulsion und des vorbestimmten Volumens der Beschickung in die Einspeisezone (24a) der Mischinstallation (20) einschließt.

16. Verfahren nach einem der Ansprüche 1 bis 14, wobei der Schritt des Einspeisens eines vorbestimmten Volumens der Emulsion aus dem Emulsionsreservoir (12a) und eines vorbestimmten Volumens der Beschickung aus dem Austragungstrichter (18a) Einbringen des vorbestimmten Volumens der Beschickung in die Einspeisezone (24a) vor dem Einbringen des vorbestimmten Volumens der Emulsion einschließt.

## Revendications

1. Procédé de mélange de liquides pour produire une composition élastomère conformément à une formule de composition élastomère sélectionnée, le procédé comprenant les étapes suivantes :
fourniture d'une émulsion stockée dans une phase liquide dans un réservoir d'émulsion (12a) d'une installation de stockage d'émulsion (12) ; fourniture d'un matériau de charge stocké dans une phase solide dans une trémie de déchargement (18a) d'un système de dosage de charge (18) ;
fourniture d'une installation de mélange (20) comprenant une extrudeuse (22) disposée dans un fourreau (24) correspondant comportant des zones de production prédéfinies multiples (24a, 24b, 24c, 24d) le long desquelles un mélange est préparé à partir de l'émulsion et du matériau de charge et une région de sortie (20a) depuis laquelle le mélange est déchargé en tant que composition élastomère dont les zones de production comprennent ;
une zone d'alimentation (24a) le long de laquelle l'émulsion et la charge sont alimentées directement dans l'extrudeuse (22) ;
une zone de malaxage (24b) définie en aval de la zone d'alimentation (24a) le long de laquelle l'extrudeuse (22) réalise une dispersion fine de particules de charge dans l'émulsion ;
une zone de séchage (24c) définie en aval de la zone de malaxage (24b) le long de laquelle l'extrudeuse (22) élimine de façon contrôlable l'eau résiduelle du mélange ; et
une zone de mélange (24d) définie à une position intermédiaire entre la zone de séchage (24c) et la région de sortie (20a) de l'installation de mélange (20), et le long de laquelle l'extrudeuse (22) fait avancer le mélange vers la région de sortie et comportant une région de terminaison coétendue avec la région de sortie depuis laquelle le mélange est déchargé ;
alimentation d'un volume prédéterminé de l'émulsion depuis le réservoir d'émulsion et d'un volume prédéterminé de la charge depuis la trémie de déchargement directement vers une zone d'alimentation (24a) de l'installation de mélange (20) ;
transport du mélange depuis la zone d'alimentation (24a) vers la région de sortie (20a) de sorte qu'un temps de séjour du mélange dans chaque zone de production soit contrôlé avant le transport du mélange vers une zone de production suivante ; et
déchargement de la composition élastomère depuis l'installation de mélange (20).

2. Procédé selon la revendication 1, dans lequel les zones de production comprennent en outre une zone de refroidissement (24e) définie à une position intermédiaire entre la zone de mélange (24d) et la région de sortie (20a) de l'installation de mélange (20), et le long de laquelle la température du mélange est réduite à une température cible lors du déchargement depuis l'installation de mélange (20).

3. Procédé selon la revendication 2, comprenant en outre l'étape d'évacuation de l'eau résiduelle depuis le mélange à un taux prédéterminé, cette étape étant effectuée au niveau d'une région de terminaison de la zone de séchage (24c).

4. Procédé selon la revendication 3, dans lequel l'étape d'évacuation de l'eau résiduelle est effectuée par un extracteur de vapeur (26) disposé au niveau de la région de terminaison de la zone de séchage (24c).

5. Procédé selon l'une quelconque des revendications 1 à 4, comprenant en outre l'étape d'introduction d'un ou plusieurs additifs (28a) dans la zone de mélange (24d) via un doseur d'additif (28) qui est disposé à une position de dosage d'additif de la zone de mélange (24d) à laquelle le mélange atteint une température cible prédéfinie pour introduire l'un ou les plusieurs additifs.

6. Procédé selon la revendication 5, dans lequel les un ou plusieurs additifs comprennent du silane.

7. Procédé selon l'une quelconque des revendications 1 à 6, comprenant en outre l'étape de refroidissement du mélange au niveau d'une installation de refroidissement (34) après déchargement de celui-ci depuis l'installation de mélange (20).

8. Procédé selon la revendication 7, comprenant en outre, après l'étape de refroidissement du mélange au niveau de l'installation de refroidissement (34), l'étape de réduction de la teneur en eau de la composition élastomère au niveau d'une installation de séchage (36) disposée en aval de l'installation de refroidissement (34).

9. Procédé selon la revendication 8, comprenant en outre, après l'étape de réduction de la teneur en eau de la composition élastomère au niveau de l'installation de séchage (36), l'ajustement d'une viscosité du matériau élastomère au niveau d'une installation de plastifiant (50) disposée en aval de l'installation de séchage (36).

10. Procédé selon la revendication 9, comprenant en outre l'étape de conversion de la composition élastomère en une ou plusieurs balles (40) après l'étape de refroidissement du mélange après le déchargement de celui-ci depuis l'installation de mélange.

11. Procédé selon l'une quelconque des revendications 1 à 9, comprenant en outre l'étape d'introduction d'un ou plusieurs agents de vulcanisation (42a) dans la zone de mélange (24d) via un doseur d'agent de vulcanisation (42) qui est disposé à une position de dosage de vulcanisation de la zone de mélange en aval du doseur d'additif (28) à laquelle le mélange atteint une température cible prédéfinie pour introduire les agents de vulcanisation.

12. Procédé selon la revendication 11, dans lequel les un ou plusieurs agents de vulcanisation comprennent du soufre.

13. Procédé selon la revendication 11 ou la revendication 12, comprenant en outre au moins une des étapes suivantes :
l'étape de formation de la composition élastomère en au moins une feuille de caoutchouc (R) ; et
l'étape d'empilage de l'au moins une feuille de caoutchouc (R) sur une ou plusieurs palettes (P).

14. Procédé selon l'une quelconque des revendications 1 à 13, dans lequel l'extrudeuse (22) comprend une extrudeuse à double vis à co-rotation.

15. Procédé selon l'une quelconque des revendications 1 à 14, dans lequel l'étape d'alimentation d'un volume prédéterminé de l'émulsion depuis le réservoir d'émulsion (12a) et d'un volume prédéterminé de la charge depuis la trémie de déchargement (18a) comprend l'alimentation simultanée du volume prédéterminé de l'émulsion et du volume prédéterminé de la charge dans la zone d'alimentation (24a) de l'installation de mélange (20).

16. Procédé selon l'une quelconque des revendications 1 à 14, dans lequel l'étape d'alimentation d'un volume prédéterminé de l'émulsion depuis le réservoir d'émulsion (12a) et d'un volume prédéterminé de la charge depuis la trémie de déchargement (18a) comprend l'introduction du volume prédéterminé de la charge dans la zone d'alimentation (24a) avant l'introduction du volume prédéterminé de l'émulsion.
